# EUROPEAN PATENT SPECIFICATION

(11) **EP 4 128 182 B1**
(45) Date of publication and mention of the grant of the patent: **21.02.2024**
(21) Application number: 21719295.4
(22) Date of filing: 23.03.2021
(51) Int. Cl.: G08B 21/04

(54) **MOBILE BASE, SYSTEM AND METHOD FOR SUPERVISION OF A MOBILE OBJECT**
MOBILE BASIS, SYSTEM UND VERFAHREN ZUR ÜBERWACHUNG EINES MOBILEN OBJEKTS
BASE MOBILE, SYSTÈME ET PROCÉDÉ DE SUPERVISION D'UN OBJET MOBILE

(30) Priority: 24.03.2020 NO 20200350
(43) Date of publication of application: 08.02.2023
(73) Proprietor: Dimeq AS, 6727 Bremanger (NO)
(72) Inventor: BAKKE, Ronny, 6729 Kalvåg (NO)
(74) Representative: Acapo AS
(86) International application number: PCT/NO2021/050073
(87) International publication number: WO 2021/194347

(56) References cited:
- WO-A2-2004/093023
- GB-A- 2 441 561

## Description

### Field of the invention

The present invention relates in general to safety and reliability of safety systems. The invention further relates to supervision of persons or objects, typically workers, inside an area of supervision, typically a marine vessel. More specifically, the supervision relates to the detection of a predetermined event, such as a man overboard-event. The invention relates to a mobile base to be attached to a mobile object for supervising the mobile object inside an area, the mobile base comprising an event detection device. The mobile base may comprise a first communication tag configured to be activated by an electromagnetic field, and a second communication tag configured to be activated by the first communication tag. The invention further relates to a system and method with a low energy usage for supervision of a mobile object wearing a mobile base.

### Background of the invention

In a working area, such as a construction site or an offshore vessel, there are many dangerous situations that can occur. HSE (health, safety, and environment) is becoming a highly focused area and precautions are taken to prevent dangerous situations from occurring. However, there will always be a risk of such events happening and it is important to also ensure that when they do, immediate response can be made in order to reduce the consequences. As these areas can be large and many people are working at the same time in different areas, it is beneficial to have a supervision system that can monitor the workers. However, such systems must be reliable to ensure that dangerous events are actually detected and that false alarms are avoided.

There are many yearly incidents related to falls and man overboard situations in the maritime industry, and the numbers are only increasing as the fleet in general is growing, together with the cruise industry, which has seen strong growth over the past decade. The number of injuries related to falls inside vessels is enormous; however, the incident that relates to more direct deaths is man overboard. The data from the last 10 years shows that the number of man overboard incidents in the cruise ship industry is very high, between 30 to 40 man overboard incidents a year.
The offshore industry is also impacted by this data; there are deaths and lost crew every year related to falls overboard.

There are several technologies on the market, such as video cameras intended to detect man overboard, but there are situations of visibility that are not always covered, there is the human factor of looking at the displays or the video detection of the falling object between other matters that makes the practicality of the technology not reliable.

The problem that makes the man overboard situations so fatal is the unknown situations by the crew or rescue team. This makes the consequences of falling overboard fatal, as no one knows about it, and when someone notices the situation, it might be too late for a rescue operation with a low level of success, as it will be increasingly difficult to find the person as the time passes. Similarly, other dangerous events that may occur, such as a fire, require immediate response and action in order to reduce the consequences.

A man overboard condition can include the loss of a vessel's personnel, crew, passengers and/or cargo. A significant danger in traveling by water is the loss of life and property due to the loss of persons or articles that fall overboard from a vessel. It is not uncommon, especially on large vessels, for a man overboard to remain unnoticed for a significant period of time. The likelihood of successful rescue decreases significantly, if a man overboard is not located soon after entering the water. The length of time and urgency of rescue is affected by many factors, including sea temperature, predator infestation and weather.

Several devices have been proposed to aid in detection of a man overboard. A known method is to use loss of signals, typically radio frequency signals, as an indication of man over board. A challenge with such monitoring systems is the battery consumption and the amount of data to be analyzed and transmitted in the system as well as reliability issues in terms of uncertainty as to why signals are lost.

US4549169A discloses a system for monitoring the security of one or more persons in a waterside environment and for providing indication of when such person falls into the water. The system includes a portable transmitter worn about the body of the person in a location which ensures its submergence when the person falls into the water. The lack of a transmitted signal indicates a "man overboard" condition resulting from the transmitter being immersed in the water and transmissions thus blocked.

US4305143A discloses a system using an ultrasonic transmitter actuated by a hydrostatic switch, to send ultrasonic signals through the water to a receiver on the boat.

WO2019/098841A1 discloses a system and method for supervising a person, the system using a device attached to the person, the device comprising a radio frequency tag used for positioning of the person. The device may comprise sensors and the system can be prepared to receive information from the sensors.

A disadvantage of using loss of signals as an indicator for a man overboard situation is that loss of signals can also occur as a result of depleted battery, for example. A further disadvantage of the solutions to determine a man overboard situation disclosed in the prior art is that the fall itself is not detected immediately, the man overboard alarm is a result of the incoming signals or loss of incoming signals resulting from the device being under water, and the system must analyze the situation and determine if a man overboard situation has occurred. There are no actual measurements that indicates that a fall has occurred.

US2015334530A1 discloses a monitoring system for monitoring spatial positions of user devices within a region. The user devices are operable to emit signals, which are received by one or more spatially-adjacent data hubs, which then communicate corresponding signals to a control center. An identity of the spatially adjacent data hubs is provided to the control center for the control center to determine therefrom the spatial positions of the user devices.

WO 2004/093023 discloses accelerometers inside badges worn by persons in a health care facility. The badges monitor fall events and can be switched off for power conservation purposes if the persons are in certain locations.

### Summary of the invention

Throughout **this document, the term "passive tag" is used to describe a radio** frequency tag that is powered by the electromagnetic energy transmitted from a nearby radio frequency reader, i.e. the tag does not comprise an internal power source, or a low power tag whose activation is triggered, for example by the electromagnetic fields of the readers. **The term "active tag" is used to describe a** radio frequency tag that is battery powered and that provides a much longer read range than passive tags.

The present invention seeks to provide a mobile base, a system, and a method for more reliable supervision of one or more mobile objects in an area, for example onboard a vessel. The supervision area may for example also be a building site, or an offshore rig or oil platform. The supervision is intended to monitor mobile objects, such as persons, inside the area and to detect if a certain event, such as a fall overboard, has occurred. Other types of events relevant to detect may be high temperature (for example related to a fire situation) or gas presence above a certain level. It is an object of the invention to provide a mobile base with low energy requirements, in order to provide a lightweight and small mobile base having a long-lasting battery life. This allows for the mobile base to be worn unattended for a user and without being heavy to carry, uncomfortable to wear, or getting in the way of normal body movements for example during working activities. A long-lasting battery life is time and cost effective as the number of battery change outs or charging cycles over time is reduced, and it makes the system more reliable, as a depleted battery may result in a non-functioning mobile base or loss of signals to the system. Prior art discloses solutions where loss of signal is used as an indication that a person has fallen overboard and into water, while the case may be that the battery is depleted. Therefore, energy saving has the effect of providing long battery life which in turn makes the system more reliable as the probability of a mobile base not functioning due to depleted battery is significantly reduced, and also the effect of being able to make the mobile base smaller.

It is an object of the invention to provide a device, a system, and method for detecting predetermined events, such as falls or man-over-board situations, that is more reliable and, more specifically, that relies on a chain of events happening when determining if an incident has occurred in order to prevent false alarms. It is thus also an object to minimize the risk of having wrong interpretations from the system, or misunderstanding the data received, resulting for example in a false man-over-board alarm. An object of the invention is also to provide a mobile base that in itself is able to determine if an event has occurred, not relying on the system to analyze the data from the sensor, thus providing immediate detection of a potentially dangerous event locally in the mobile base. The mobile base only needs to transmit an event rather than a series of data from the sensor, which simplifies the system, i.e. standard equipment can be used for transmitting the information, and battery consumption of the mobile base is significantly reduced as the transmitted data is minimized. In addition, this prevents overloading the system with heavy data transfers which could potentially result in downtime of the system. Even more, it is an object to provide a system that is compatible with existing systems and equipment and that is possible to install on already existing vessels, building sites etc.

The invention is based on utilizing standardized communication platforms and simple and lightweight personal tags. The invention is based on the principle of energy management in order to reduce energy consumption where possible. The invention provides huge advantages for the detection of events, and specifically falls overboard, for energy management of the mobile base, for reliability of the system, size of the mobile base, and simplicity of the overall installation, and a mobile base that is able to integrate and be used for other purposes as for example, key or payment methods by using the BLE or NFC integrated in the latest BLE chips.

The objects of the invention are achieved by a mobile base, a system and a method as defined by the independent claims, while alternatives, variants and embodiments are defined by the dependent claims.

Thus, the invenion is defined by a mobile base according to claim 1.

In embodiments, each zone is identified by a unique zone ID, and the mobile base comprises a primary tag configured to: be activated by an electromagnetic field associated with the zone; activate the communication tag; receive the zone ID from the electromagnetic field; and forward the zone ID to the communication tag.

In embodiments, the communication tag is configured to broadcast the mobile ID and the zone ID when the zone is a non-event prone zone for positioning of the mobile base by the system. The zone ID may only be broadcast to the readers in the non-event prone zones (i.e. when the event detection device is switched off).

In embodiments, the communication tag is configured to deactivate the corresponding event detection device(s) when the zone is a non-event prone zone and the event detection device(s) is active.

In embodiments, the communication tag is configured to activate the corresponding event detection device(s) when the zone is an activation zone and the event detection device(s) is inactive.

In embodiments, the area also comprises at least one event prone zone and each of the one or more activation zones is located between an event prone zone and a non-event prone zone.

In some embodiments, the activation zones and the event prone zones represent areas covered by the same group of readers (i.e. the activation zones and the event prone zones are the same), so that each of the event prone zones also produces an electromagnetic field for activating the second/communication tag, generally with a zone ID which is received by the primary tag and sent to the communication tag. In some embodiments, the activation zones represent the border between even prone zones and non-event prone zones and the readers in the event prone zones function differently to those in the activation zones or non-event prone zones (they may not produce an electromagnetic field and send a zone ID, for example).

Activation of the event detection device may thus be done only when the mobile object having the mobile base attached enters a zone configured as an "activation zone", and this may correspond to entry into an event prone zone or to the zone that must be passed through immediately prior to entry to an event prone zone such as a man overboard zone (MOB-zone). Activation zones may be located in regions such as corridors or doorways between adjacent areas of the ship where one area represents one or more event-prone zones and the other represents one or more non-event prone zones. The activation zones can be arranged so that a wearer or carrier of the mobile base must necessarily pass through an activation zone when moving from a non-event prone zone to an event prone zone. The event detection device(s) is thus inactive for as long as the mobile object is not in a risk zone, which significantly reduces the use of battery of the mobile base. The event detection device can be deactivated again on re-entry to a non-event prone zone.

In embodiments, the communication tag is configured to broadcast the mobile base ID at predetermined time intervals, and the time intervals are shorter when the event detection device is activated than when it is deactivated.

In embodiments, the mobile base is configured to broadcast information to be used by the system in determining the position of the mobile base when the event detection device is activated. The information may be broadcast by the communication tag. In embodiments, the information to be used for positioning comprises a UWB signal. The signal (UWB or otherwise) can be the same signal as used to transmit the mobile ID to the readers at intervals. A time stamp associated with the signal can be used for positioning as described below, and this time stamp may be added to the data on receipt by a reader. The positioning mechanism may therefore be different, and more accurate, when the mobile base is in an event prone zone with the event detection device activated than when it is in a non-event prone zone with the detection device deactivated. This saves battery whilst still providing the more detailed information required within areas where the risk of accidents is higher.

The event detection device(s) may each comprise a sensor, such as an acceleration, velocity, gyroscope, temperature, gas sensor, heart rate monitor, or barometer and an internal algorithm prepared to determine if a predefined event has occurred. In one embodiment the sensor is an accelerometer which determines if a fall event has occurred and if such event is detected, only information that a fall was detected need to be forwarded to the second communication tag for the system to know that a person being monitored has fallen. Relevant event prone zones for the fall event detection device are for example a bridge or an open deck on a vessel with a risk of a dangerous fall or man overboard. In another embodiment, the sensor is a gas detection sensor capable of determining the level of a certain gas and to determine if the amount of gas exceeds a certain predefined dangerous limit. A relevant event prone zone for the gas event detection device is for example an area with risk of a gas leak. In yet another embodiment, the mobile base comprises several different event detection devices each with a specific sensor for its purpose, or one event detection device capable of handling several different sensor outputs. The zones can be registered as event prone zones or activation zones for one or more different events, and the communication tag can then activate the corresponding detection device(s).

The output from the event detection device does not need to include the actual measurements or detailed data but includes a message that a predetermined event has been detected based on the internal algorithm of the event detection device. No additional analysis of sensor data is required on the mobile base or external readers. This simplifies the system and saves energy and time as the system does not need to analyze data received from the sensors, but receives a notification that an event has occurred and can react to this event immediately. In prior art systems related to fall detection, data from an accelerometer, such as x, y, z-axis acceleration readings, is collected and sent to a processor over the network. The processor analyzes the data and determines if a fall is detected. This requires a lot of communication events and accordingly a lot of battery power. Moreover, the amount of data generated by an accelerometer (or other types of sensors) would be hard to process on the wristband processor without reasonable amount of energy, and broadcasting such data is not feasible. In one system, many, maybe hundreds, of mobile bases may be connected to one network and the readings from the sensor can be done as often as a few times per second. This would generate a huge amount of data to transfer, possibly overload the network, and even more it would drain the battery.

The primary tag may be a passive communication tag, and may be powered by the electromagnetic fields of the readers. The passive communication tag/primary tag may comprise no internal power source. The primary tag may be a low power tag whose activation is triggered, for example by the electromagnetic fields of the readers. Where a first communication tag and a second communication tag are referred to herein, these are equivalent to the primary tag and communication tag mentioned above. This is especially beneficial in terms of battery saving. The primary tag may preferably operate via radio frequency in the Low or Very Low Frequency range (VLF) (3-300 kHz) or in the Ultra High Frequency range (300-3000 MHz), preferably within the range of 860-900 MHz.. VLF is a proven technology for example in military underwater communication. The wavelength can travel from air to water, and water to air, and still be readable, which offers the possibility for this invention to detect signals in many different situations related to systems used in spaces on or close to water, for example rescue operations on vessels in water. In addition, the long range, low energy consumption and configurability make VLF technology especially suitable for this application. The VLF signals does not travel through steel walls, which is a functionality that can be used to control the range of a frequency field, for example.

The communication tag may be an active communication tag. The second communication tag may preferably operate in the Ultra High Frequency range, preferably of 2,4 GHz. Selection of the operating frequency for the communication tags depends on the desired functions, and the functionality and advantages for the different ranges should be assessed together with the desired functions of the mobile base and its communications and area of use. A skilled person in the field will know the different capabilities, limitations and advantages of using the different ranges. Advantages of using Bluetooth are described below.

The active communication tag may preferably be a Bluetooth tag, to effectively be able to transmit data within the necessary range. Bluetooth offers effective communication in terms of communication range and data transfer speed, and in addition, the data package size, chip size and battery consumption are beneficial in a mobile base as in this invention. Furthermore, Bluetooth offers a wide range of functions, especially in terms of integration with Internet of Things (IoT) and mobile devices, which can be utilized to provide a multifunctional system where the object to be supervised only wears a small mobile base. Even more preferably, the (second) communication tag may be a Bluetooth Low Energy tag, which has the above-mentioned advantages of a regular Bluetooth component and additionally offers reduced power consumption.

In one embodiment the mobile base is configured to be worn by a person as a wristband. A wristband is a suitable form of the mobile base for workers for example as it is worn as a normal watch, it is small and light-weight, the user has control over the watch and can see a display (if the mobile base is equipped with this) and it is suitable for interaction by pushing a button or similar.

In one embodiment of the mobile base, the event detection device comprises an acceleration sensor and is configured to detect a fall of a person wearing the mobile base on the wrist.

A system for supervision of at least one mobile object inside an area, the mobile object having a mobile base according to any of the preceding claims attached, the area being divided into zones of at least two different types, namely an activation zone and a non-event prone zone, the system comprising one or more readers located at fixed positions and configured to create an electromagnetic field associated with each zone and to receive data transmitted from the mobile base(s), and to forward a corresponding mobile base ID to a central controller.

If the communication tag is configured to forward a zone ID and mobile base ID in non-event prone zones, this information can also be forwarded from the readers to the central controller. The central controller may for example have a map of the area with the different zones, list of objects or persons registered with each mobile base ID, in order to easily get control over the situation.

In embodiments, each zone is identified by a unique zone ID, each of the readers is configured with the zone ID corresponding to its location, and the electromagnetic field created by the reader comprises its zone ID.

In embodiments, the area comprises event prone zones, and each of the one or more activation zones is located between at least one non-event prone zone and at least one event prone zone. The activation zone may be located directly between an event prone zone and a non-event prone zone, i.e. to represent a border between these two zone types. In event prone zones the system will also be aware of the position of the mobile base, but this may be achieved by a different and usually a more accurate positioning system as described below.

In embodiments, the area comprises readers associated with the event prone zones and configured to receive an event ID transmitted by the mobile base and forward a corresponding mobile base ID and event ID to the central controller such that the system will be aware of the detected event and be able to identify the mobile object and its location.

In embodiments, the central controller is configured to initiate a response upon receiving information that an event has occurred, and preferably such a response includes at least the initiation of an alarm.

In embodiments, the one more readers associated with the event prone zones are positioned in event prone zones where a dangerous fall or a fall overboard may occur, such as an open deck, and are each configured to receive the event ID and the mobile ID from the mobile base for forwarding to the central controller, and the corresponding event detection device in the mobile base(s) comprises an accelerometer and an internal algorithm configured to determine if a fall has occurred based on the measurements of the accelerometer.

In some cases, the readers associated with the event prone zones receive information from the mobile band when it is located in the event prone zone, but do not create electromagnetic fields. If the information is sent via UWB or another transmission mechanism with a long range the readers in the event prone zones may be more sparsely distributed, or may be situated further apart from one another, than in the non-event prone zones and the activation zones. The zone associated with each of the readers (including readers in the non-event prone zones, activation zones, and event prone zones) may correspond to the read range of the reader, i.e. the area surrounding the reader within which it can pick up a signal from the mobile base. These zones may in some cases overlap (such as for the event prone zones) or may represent completely separate areas.

The invention is defined by the method according to claim 15.

In embodiments, the method comprises: sending the zone ID to a primary tag via the electromagnetic field of the reader; sending the zone ID to the communication tag by the primary tag, and broadcasting the zone ID by the communication tag.

In embodiments, the method comprises: waking up and sending the zone ID to a primary tag by an electromagnetic field when entered by the mobile base; and waking up and sending the zone ID to the communication tag by the primary tag.

In embodiments, the area comprises event prone zones, and each of the activation zones are located between at least one non-event prone zone and at least one event prone zone.

The event prone zones may be selected as areas within the area of supervision wherein one or more of the following situations may occur or is likely to occur; a dangerous fall, a fall overboard, a gas leak, fire, or critical temperature level.

One or more readers are positioned and configured to create electromagnetic fields covering non-event prone zones and activation zones, preferably at least activation zones adjacent to event prone zones relating to a dangerous fall or a fall overboard, such as an open deck. In most cases the communication tag will remain active once the event detection device is activated without requiring activation by the primary tag. This ensures that information is sent continuously when the mobile base is within the event prone zones. Readers may also be configured to create electromagnetic fields covering the or additional event prone zones, but the main requirement for readers covering the event prone zones is that they can receive information from the mobile base. This information can include an event ID, and/or other information relating to a detected event, which can then be passed on from the reader to the central controller.

In one embodiment, the method also comprises a subsequent step comprising receiving the data broadcast from the communication tag of the mobile base by one or more readers located at fixed positions and the readers forwarding this data to a central controller, and optionally, the central controller, upon receiving data corresponding to an event, initiating a response, such as starting an alarm and/or determining a position of the mobile base.

In yet another embodiment the central controller, upon receiving data corresponding to a fall event, detects loss of radio frequency signals from the second communication tag of the mobile base, indicating that the mobile base is in water and a fall overboard has occurred. This additional step adds certainty to the event, and also, since a fall in a zone with risk of man overboard can occur without actually falling overboard and into water, it will help the rescue team know if to start a search in water or on board the vessel.

According to a fourth aspect, there is provided a mobile base with a mobile base ID configured to be attached to a mobile object for supervising the mobile object inside an area, the area being divided into zones of at least two different types, namely an event prone zone and a non-event prone zone, each zone identified by a unique zone ID, the mobile base comprising:
- one or more event detection devices, each configured to detect a predefined event,
- a first communication tag configured to be activated by and receive at least a zone ID from an electromagnetic field, and - a second communication tag, wherein - the first communication tag is configured to activate the second communication tag and forward at least the zone ID to the second communication tag, - the second communication tag being configured to, depending on the zone type, activate or deactivate the corresponding event detection device(s), and - the event detection device(s) being configured to communicate a detected event with an event ID to the second communication tag, the second communication tag being configured to broadcast the event ID, mobile base ID, and zone ID. Activation zones may therefore be dispensed with or may be the same as/equivalent to the event prone zones, and the event detection device activated when moving from a non-event prone zone to an event-prone zone and de-activated when moving in the opposite direction. Where the zone type does not change as the object moved between zones, the status (activated or de-activated) of the event detection device will also not change.

In embodiments, the event detection device(s) each comprises a sensor, and an internal algorithm prepared to determine if a predefined event has occurred.

In embodiments, the event detection device(s) each comprises at least one of the following sensors: an acceleration, velocity, gyroscope, temperature, gas sensor, heart rate monitor, or barometer.

In embodiments, the first communication tag is a passive communication tag.

In embodiments, the first communication tag (110) operates via radio frequency in the Low or Very Low Frequency range (3-300 kHz) or in the Ultra High Frequency range (300-3000 MHz), preferably within the range of 860-900 MHz.

In embodiments, the second communication tag (120) is an active communication tag.

In embodiments, the second communication tag (120) preferably operates via radio frequency in the Ultra High Frequency range, preferably of 2,4 GHz, or preferably is a Bluetooth Low Energy tag.

In embodiments, the mobile base is configured to be attached to a person as a wristband.

In embodiments, the event detection device comprises an acceleration sensor and is configured to detect a fall of a person wearing the mobile base on the wrist.

According to a fifth aspect, there is provided a system for supervision of at least one mobile object inside an area, the mobile object having a mobile base according to any of the preceding claims attached, the area being divided into zones of at least two different types, namely an event prone zone and a non-event prone zone, each zone identified by a unique zone ID, the system comprising one or more readers located at fixed positions and configured with the zone ID corresponding to its location, the readers further being configured to create electromagnetic fields comprising the zone ID and to receive data transmitted from the mobile base(s), and to forward a received event with an event ID, the corresponding mobile base ID and zone ID to a central controller such that the system will be aware of the detected event and being able to identify the mobile object and its location.

In embodiments, the central controller is configured to initiate a response upon receiving information that an event has occurred, preferably such a response includes at least the initiation of an alarm.

In embodiments, one more of the readers are positioned and configured to create electromagnetic fields covering event prone zones where a dangerous fall or a fall overboard may occur, such as an open deck, and the corresponding event detection device in the mobile base(s) comprises an accelerometer and an internal algorithm configured to determine if a fall has occurred based on the measurements of the accelerometer.

According to a sixth aspect, there is provided a method for supervision of a mobile object having attached a mobile base with a mobile base ID in an area divided into zones of at least two different types, namely an event prone zone and non-event prone zone, each zone identified by a unique zone ID, where the mobile base comprises a first communication tag (110), a second communication tag (120), and at least one event detection device (130), where the method comprises the following event driven sequential steps: - waking up and sending a zone ID to the first communication tag by an electromagnetic field when entered by the mobile base; - waking up and sending the zone ID to the second communication tag by the first communication tag; - activating or deactivating the corresponding event detection device(s) depending on the zone type, and preferably broadcasting the mobile base ID and the zone ID by the second communication tag; - detecting an event with an event ID and then notifying the second communication tag by the event detection device; and - broadcasting also the event ID with the zone ID and the mobile base ID by the second communication tag.

In embodiments, the event prone zones are selected as areas within the area of supervision wherein one or more of the following situations may occur or is likely to occur: a dangerous fall, a fall overboard, a gas leak, fire, critical temperature level.

In embodiments, one or more readers are positioned and configured to create electromagnetic fields covering event prone zones, preferably at least event prone zones relating to a dangerous fall or a fall overboard, such as an open deck.

In embodiments, a subsequent step comprises receiving the data broadcasted from the second communication tag of the mobile base by one or more readers located at fixed positions and the readers forwarding this data to a central controller, and optionally, the central controller, upon receiving data corresponding to an event, initiating a response, such as starting an alarm and/or determining a position of the mobile base.

In embodiments, the central controller, upon receiving data corresponding to a fall event, detects loss of radio frequency signals from the second communication tag of the mobile base, indicating that the mobile base is in water and a fall overboard has occurred.

The frequency range of the radio frequency bands referred to in throughout this document and including the claims, are defined as follows:
- Very low frequency: 3 kHz to 30 kHz
- Low frequency: 30 kHz to 300 kHz
- Medium frequency: 300 kHz to 3 MHz
- High/Ultra high frequency: 3 MHz to 30 GHz
- Bluetooth/Bluetooth low energy (BLE): 2,4GHz

### Description of the diagrams

Embodiments of the present invention will now be described, by way of example only, with reference to the following diagrams wherein:
Figure 1 shows a schematic operation diagram of an embodiment of a mobile **base according to the invention in "normal mode" indicating the connection and** communication between internal components of the mobile base and the incoming and outgoing communication between the mobile base and the system in which it is used;
Figure 2 shows a schematic diagram of components of an embodiment of a system including a mobile base according to the invention indicating communication paths between the components of the system;
Figure 3 shows a schematic operation diagram of an embodiment of a mobile **base according to the invention in "MOB-mode" or "event detection mode"** indicating the connection and communication between internal components of the mobile base and the incoming and outgoing communication between the mobile base and the system in which it is used;
Figure 4A illustrates the position of readers in an area comprising non-event prone zones (safe zones: light grey readers) and event prone zones/activation zones (black readers);
Figure 4B illustrates the position of readers within a system configured to include readers representing activation zones (black), non-event prone zones (grey), and separate event prone zones (white).

### Description of embodiments of the invention

The following description of the exemplary embodiments refers to the accompanying drawings. The same reference numbers in different drawings identify the same or similar elements. The following detailed description does not limit the invention. Instead, the scope of the invention is defined by the appended claims.

**Reference throughout the specification to "one embodiment" or "an embodiment" means that a particular feature, structure or characteristic described in** connection with an embodiment is included in at least one embodiment of the subject **matter disclosed. Thus, the appearance of the phrases "in one embodiment" or "in an embodiment" in various places throughout the specification is not necessarily** referring to the same embodiment. Further particular features, structures or characteristics may be combined in any suitable manner or in one or more embodiments.

In the following description, examples of the invention used in relation to the detection of a fall event or a man overboard-event will be described. However, although specifically beneficial for the purpose of a man overboard-event, the invention is not limited only to fall detection, but can be used for the detection of any relevant event in a specific area of supervision, such as gas or temperature detection, wherein a suitable sensor may be used with the event detection device, and the sensor being prepared to determine a predefined event based on its measurements and the preconfigured threshold(s).

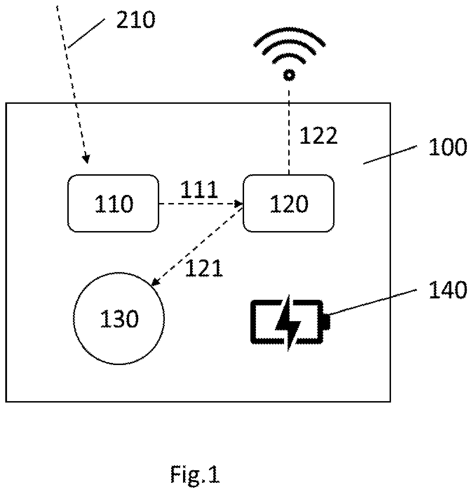

Figure 1 shows a schematic operation diagram of an embodiment of a mobile base 100 **according to the invention in "normal mode" indicating the connection and** communication between internal components of the mobile base 100 and the incoming and outgoing communication between the mobile base 100 and the system 500 in which it is used. **"Normal mode" means that the mobile base** 100 is active and worn by a mobile object 400, such as a person, but no event is detected at this point. The mobile base 100 comprises a primary tag or first communication tag 110, in this embodiment a passive tag, and a communication tag or second communication tag 120, in this embodiment an active tag. Both tags are communicating through radio frequency, however, preferably operating at different frequencies or different frequency ranges. The passive tag 110 is configured to be activated by an electromagnetic field 210. The active tag 120 is configured to be activated by the passive tag 110. The mobile base 100 also comprises a power source, i.e. a battery, 140 and computing means, such as an internal processor (not shown in Figure 1) that, amongst other things, is prepared to handle communications of the components of the mobile base 100, i.e. the active and passive tags 110, 120, and controls the state of the mobile base 100, i.e. shelf mode or active. The computing means may for example be one or more microcontrollers or internal processors as separate units in the mobile base 100 or as integrated parts of the communication tags. In one embodiment the passive tag 110 operates in the 860-900 MHz frequency range, while the active tag 120 operates in the 2,4 GHz band. The typical read range in this embodiment is about 30-40 m for the passive tag 110, and 100 m for the active tag 120, depending on the environment. Preferably, the active tag 120 is a Bluetooth tag, or even more preferably a Bluetooth Low Energy (BLE) tag, in order to save battery. In another embodiment, the passive tag 110 uses RFID, Low Frequency (LF), or Very Low Frequency (VLF). In yet another embodiment the active tag 120 operates at a higher frequency, for example 5 GHz. The active tag 120 may use the battery of the wristband for power or may have its own internal battery. The passive tag 110 may receive its energy from an electromagnetic field 210 created by nearby readers 200.

The mobile base 100 comprises an event detection device 130 comprising an accelerometer (sensor), and with an application processor configured to detect a fall of the object, i.e. the person, to which it is attached. The passive and active tags 110, 120 may be provided with an application processor. The active tag 120 may provide communication based on NFC and/or BLE and/or UWB. NFC can for example be used to activate the mobile base from shelf-mode and may also be a module separate from the active tag 120. UWB can be used to send positioning data when the event detection device is switched on and the mobile base is in an event prone zone. The application processor of the event detection device 130 of this embodiment comprises a linear freefall algorithm that samples the x-, y-, and z-axis data from the accelerometer, and analyses if conditions relating to a freefall are met. Freefall may be detected if the acceleration on all three axes is determined to be at 0-g (with a predefined margin) for a set period of time (for example five samples in a row). The fall detection algorithm is part of a built-in algorithm of the event detection device 130, and the event detection device is thus in this embodiment programmed such that it is able to recognize acceleration measurements consistent with a fall.

The active communication tag 120 is configured to broadcast the information received from the event detection device 130, such that readers 200 within the read range can receive this information and forward to a controller 300 for further response to a fall event, such as triggering an alarm, initiate search operation etc. By broadcasting is meant to send out a signal, either as a broadcast for any reader 200 within the read range to receive, or it can be sent to one or more designated readers 200. In other embodiments, the event detection device 130 comprises another type of sensor for detecting a different type of event. The event detection device 130 may comprise an internal application processor pre-configured to analyze the measurements taken by the sensor and to determine whether these measurements correspond to an event as defined by a predetermined range of parameters and a given threshold. Fall detection devices comprising an accelerometer, however, require testing, and configuration of the accelerometer should be performed in order to obtain a reliable determination of a fall event and to prevent false positives. Finetuning of the accelerometer may include configuration of time period for detection of freefall such that jumps from stairs or the like is excluded, which is related to the height from which the fall is detected. Moreover, the accelerometer should be suitable for the intended use as a wearable device, i.e. depending on where on the body it is fastened (such as wrist, head, foot etc.), the analysis of the data should take this into consideration. For example, an accelerometer integrated in a wristband will have different readings compared to an accelerometer located on a helmet used **by the same person. The accelerometer intended to be used on a person's wrist, must take account of the "noise" resulting from arm movements and be able to** distinguish this from a fall event. A person skilled in the art will be familiar with the relevant parameters and tests to be performed in order to configure the accelerometer for this purpose.

The mobile base 100 is a small, lightweight device intended to be attached to a user 400 that is easy to attach and that can be worn unattended, preferably as a wristband. A wristband is easy to put on, convenient to operate by the user 400, easy for others to see (for example to verify that the wristband is put on), and it does not easily fall off. A mobile base 100 in the form of a wristband could also comprise other functions, such as displaying information to the user via a screen. The mobile base 100 may for example also be a small device intended to be fastened to the body or clothing, for example slipped into a small pocket of the clothing used, fastened to a helmet or clipped onto clothing or shoes, etc. It should be fastened such that it is more or less in fixed position relative to the body, and the fall detection algorithm should be adapted according to the placement of the mobile base 100. It is preferred that the mobile base 100 is not fixed to clothing, as a person may forget to move the mobile base to other clothing if a jacket is taken off for example.

**In the following descriptions of embodiments, the words "mobile base" and "wristband" are used interchangeably, however, this does not limit the invention only** to a wristband. The embodiments are described in relation to a vessel, but the supervision area of the system is not limited only to a vessel, and may be used in other relevant areas for supervision for example relevant for fall- or man overboard situations, for example building sites, a dock area or harbour, etc. In relation to a vessel, the supervision area can be the entire vessel, or a part of a vessel, depending on the setup of the system, which may be determined specifically for each case or each area to be supervised.

The wristband 100, when not in use and not assigned to a user 400, is stored **in "shelf mode". In shelf mode, the wristband** 100 is inactive, i.e. it cannot be operated, apart from being woken up, and it does not send out any information. Shelf mode is intended for transportation and storage purposes. The wristband 100 may for example be woken up from shelf mode using near field communication (NFC), if the mobile base 100 is provided with NFC-module, for example by use of a tablet or smart phone also provided with NFC-module and with software prepared for this purpose.

Supervision is possible after the wristband 100 is woken up from shelf mode, i.e. activated. The mobile base 100 **is then in "normal mode"**. The activation process can be done manually during assignment of the wristband 100 to the user 400. After activation, the wristband 100 will, via the active tag 120, **periodically broadcast "I am alive" message to let the system** 500 know that the wristband 100 is still operational. This signal may be broadcast whether or not the mobile base is within an EM field of one of the readers. If this broadcasting suddenly stops, it may be a result of damage to the wristband 100, depleted battery, wristband is out of range for the system to receive signals, etc. When the event detection device is switched on, the mobile base **can be said to be in "event detection mode". The broadcasting of the "I am** alive" data is carried out periodically, and can be carried out more regularly when the device is in event detection mode than otherwise. **The frequency with which the "I am alive" data is broadcast will depend** the requirements of the installation. In some installations it will be important to have good responsivity and in such a case more frequent updates as to the status of the device will be required. When the system is required to have good responsivity, the data may be sent out every 0.5 to 2 seconds, preferably around every second when the mobile base is in event detection mode and every 1 to 10, preferably every 2 to 4, most preferably around every three seconds when the mobile base is not in event detection mode. This will, however, lead to faster battery drain. If battery lifetime is a priority, then time intervals between broadcasts can be increased to save battery within the required responsiveness range. The intervals in such installations may be e.g. 3 to 7, most preferably around 5 seconds when the mobile base is in event detection mode and 10 to 20, most preferably around 15 seconds otherwise.

When the person 400 wearing the wristband 100 enters an electromagnetic field 210, the passive tag 110 is activated and wakes up the active tag 120 (illustrated by dotted line 111), which will broadcast the wristband location (i.e. zone ID) via radio frequency (illustrated by dotted line 122). Preferably, Bluetooth is used. The electromagnetic field 210 that wakes up the passive tag 110 **comprises a** "zone **ID", and possibly also a "zone type"**, which is forwarded from the passive tag 110 to the active tag 120. This zone ID is an identification assigned to every reader 200 of the system 500 and is set during pre-configuration stage of the system 500, such that the system 500 has information of the location of every reader 200 of the system 500 which is related to its unique zone ID. The zone **ID is registered with a** "zone **type", of which the system** comprises at least a type relating to an activation zone and a type relating to a non-event prone zone. Zone types may also include event prone zones, although in some cases readers in the event prone zones will not produce an electromagnetic field or broadcast a zone ID to the mobile base. The activation zones may be located so as to represent a border between non-event prone zones and event prone zones. Activation zones may, for example, encompass areas such as doors or corridors leading between event prone and non-event prone zones. The activation zones may be located such that when passing between a non-event prone zone and an event prone zone, an object/person must always pass through an activation zone. In an embodiment of the invention, for example with only a few zones, the zone ID may actually be the zone type. The zone type determines the steps to be taken by the active tag 120. The active tag 120 will know the zone type of the zone ID either from receiving the zone type or an instruction associated with the zone type as input from the passive tag 110 (for example a flag in the activation signal which differentiates an activation zone and/or event prone zone from non-event prone zone), or by finding the zone type corresponding to the received zone ID, which for example may be registered with its internal memory. The event prone zone may for example be an area with risk of man overboard (MOB) situation, **in this specification is referred to as a "MOB-zone" type** and an activation zone may be located **between this "MOB-zone" and a non**-event prone zone such that the mobile base must pass through the or an activation zone on entry to the event prone zone. Such an MOB-zone may for example be an area of a vessel where a fall overboard can occur, such as an open deck, or a moon pool area. This zone is not limited to risk of falling overboard and into the sea but may also be applied for areas on board a vessel where a dangerous fall can occur, such as off a bridge, a stairway or an internal deck. A non-event prone zone may be used as a type relating to an area where man overboard situations is not relevant, i.e. indoors, **in this specification referred to as a "internal zone" type.**

If the wristband 100 enters an electromagnetic field 210 with a zone ID registered as an internal/non-event prone zone, the active tag 120 will broadcast the zone ID together with the wristband ID (mobile base ID), as indicated by the dotted line 122 on Fig. 1. This broadcast can be received by any reader 200 of the system 500 that is within the read range of the active tag 120. The reader 200 can forward this information to a central controller 300, which will then have an overview of where persons are, even if they are not in an event prone zone. This function is not an absolute requirement for the invention to work but is desirable for the system to maintain a good overview of all persons being supervised. If only event prone and non-event prone zones are present, the active tag 120 may, if the zone type is different from the last entered zone type, activate or deactivate the corresponding event detection device 130. Thus, if the wristband is moving from one internal zone to another internal zone (i.e. same zone type but with a different zone ID), then the event detection device 130 will remain inactive. If the wristband 100 is moving from a MOB-zone to an internal zone (i.e. from event prone zone to non-event prone zone), the event detection device 130 will be deactivated, as indicated by dotted line 121. Where activation zones are present, this activation or deactivation of the event detection device will occur when the mobile base moves into an activation zone on the way from a non-event prone zone to an event prone zone, or when the mobile base moves from an activation zone to a non-event prone zone on the way back from an event prone zone. Generally, the passive tag receives a signal or instruction from the reader which is passed to the active tag to tell it to activate event detection mode if the zone associated with the reader is an activation zone. Similarly, the passive tag receives a signal or instruction from the reader which is passed to the active tag to tell it to deactivate event detection mode if the zone associated with the reader is a non-event prone zone. In the example described above, at this point the accelerometer (part of the event detection device) is switched on and begins monitoring for a possible fall event, and at the same time the mobile base may switch to more accurate positioning in which case it will begin broadcasting positioning information, which may comprise UWB signals. If the mobile base moves so that it is in communication with a different reader (i.e. into a different zone), nothing will change provided that the reader is associated with the same zone type as the previous reader. The passive tag, and therefore the active tag, may still receive the instruction either to deactivate or activate the event detection device, but the event detection device will already be switched on (or switched off), and so the instruction will have no effect. The active tag may receive the direction or instructions relating to switching on and off of event detection mode directly in some cases, but this will usually be done via the passive tag. The wristband 100 as described above comprises the minimum configuration for the present invention. In other embodiments, the wristband 100 may have additional functions such as a watch, having a display for displaying messages or notifications, other sensors (for example heart rate monitor), gps, etc. A gyroscope could also be utilized for positioning of the mobile base 100.

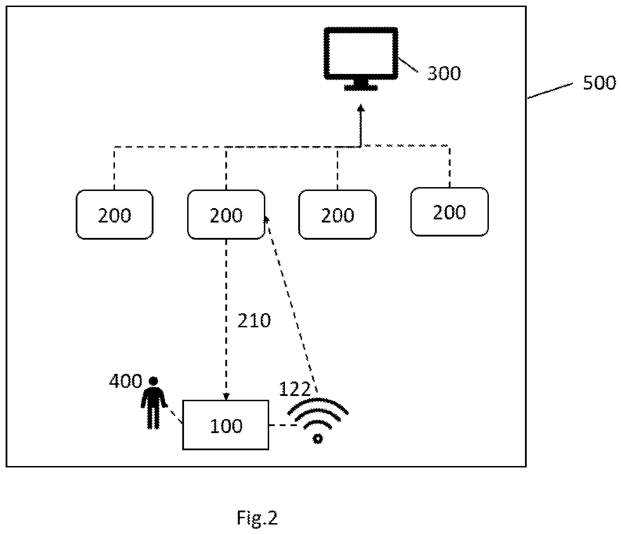

Figure 2 shows a schematic diagram of components of an embodiment of a system 500 including a mobile base 100 according to the invention indicating communication paths between the components of the system 500. The system comprises several readers 200, having a fixed position and generating electromagnetic fields 210. The readers 200 are able to communicate with a central controller 300 and with the mobile bases 100 of the system 500 for forwarding information to/from the controller 300 and to/from the mobile bases 100. The readers 200 thus as a minimum comprise a module capable of creating an electromagnetic field 210, a radio frequency module for communicating with the active radio frequency tag 120 on the mobile base, an application processor, and a means for communicating information to a central controller 300. The readers 200 may represent the readers in the non-event prone zones and the activation zones. Readers in the event prone zones may, in some examples, be configured slightly differently to cooperate with the mobile base in event detection mode as described below. The readers in the event prone zones may lack the module capable of creating an electromagnetic field, or all of the readers in the system may be of the same type (i.e. all including the module capable of creating an electromagnetic field) but may be configured differently (i.e. by disabling or enabling the module) in the different zones. The readers may also comprise other modules depending on the specific communication paths chosen, for example a wifi-module. As Fig.2 is only meant to illustrate schematically the system 500, only four readers 200 and only one mobile base 100 are shown for simplicity, however the number of readers 200 and the number of mobile bases 100 is typically much higher. In one system, many, possibly hundreds, such mobile bases 100 may be included. As a minimum, the system includes at least one reader 200 for communicating with the mobile bases 100 connected to the system 500. Prior to setting up the system 500, it is important to evaluate and determine zones on the vessel (or the area of supervision) with risk of a fall or man overboard situation. Such zones may typically be an open deck, a bridge, etc. The readers 200 are intended to create electromagnetic fields 210 covering these zones, and/or to receive signals from mobile bases located within these zones. The readers 200 comprise an internal memory, preferably a nonvolatile memory, which is used to store information such as zone ID. The mobile base 100 of the embodiment of Fig.2 is as described in the previous paragraphs relating to Fig.1, and the system 500 **is shown in "normal mode", which means that** the mobile base 100 is active and in use by a person 400, this person having entered an electromagnetic field 210 registered with a zone ID relating to an internal zone. As the zone ID is registered as internal zone, the mobile base 100 can continue in normal mode. The zone ID is forwarded to the active tag 120, as described in relation to Fig. 1, and the active tag 120 broadcasts 122 the zone ID and the wristband ID (or mobile base ID). One of the readers 200 will pick up this signal and forward it to a central controller 300 of the system, which then will be able to determine a position of the person 400 wearing the mobile base 100, based on the zone ID and/or position of the reader 200 that picked up the signal from the mobile base 100. In one embodiment, the position of the mobile base 100 can be more precisely determined by triangulating the position using the active radio frequency tag 120 and the readers 200 for which the mobile base 100 is within the read range. In some embodiments, more accurate positioning methods may be used only when the mobile base is located within an event-prone zone and event detection mode is switched on, as will be described in more detail below. The central controller 300 may for example be a computer in an operation centre on the vessel. The central controller 300 may have different types of information stored, such as for example name and personal information of the user assigned with the wristband associated with the wristband ID received, a map of the vessel or area of supervision indicating the location of the person 400, i.e. the wristband 100, locations of mustering areas, safety equipment such as fire extinguisher or flotation devices and life boats, location of other persons assigned with a wristband. An operator monitoring the central controller will thus have information about where persons are and who are currently located inside a high-risk zone for falling or falling overboard.

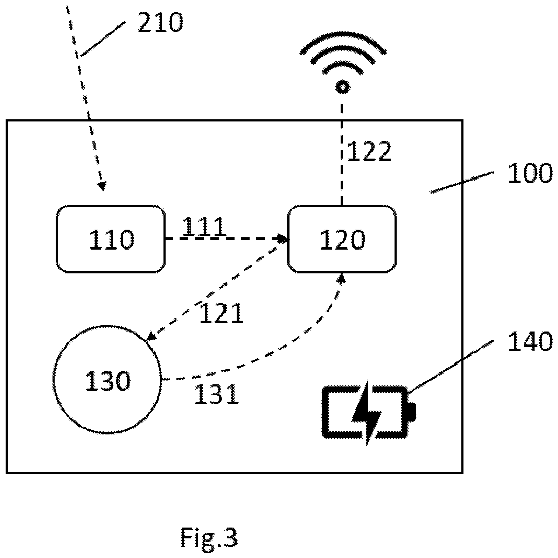

Figure 3 shows a schematic operation diagram of an embodiment of a mobile **base 100 according to the invention in "MOB-mode" or "event detection mode"** in an embodiment where the activation zones and event-prone zones are the same (i.e. there are no additional event prone zones which are configured differently) and indicating the connection and communication between internal components of the mobile base 100 and the incoming and outgoing communication between the mobile base 100 and the system 500. This mode will be in use whenever the person is within an event-prone zone. Where event prone zones and activation zones are the same, if the person 400 wearing a wristband 100 moves from an internal zone and enters an electromagnetic field 210 registered as a MOB-zone (activation zone/event prone zone), the passive tag 110 will forward 111 this zone ID to the active tag 120, which will start broadcasting 122 the zone ID and wristband ID. The active tag 120 will also, if the zone ID is registered as MOB-zone, activate the event detection device 130 on the wristband 100 as indicated by the dotted line 121 to start measuring acceleration. As the active tag 120 is configured to broadcast the zone ID and wristband ID when entering an event prone zone, the system will be aware that there is a person currently in a risk zone. The event detection device 130 will stay active as long as the wristband 100 is in a MOB-zone. Continuous acceleration measurements are battery consuming and it is not unlikely that a person is in and out of fall risk zones during the workday. During lunch breaks or meetings in meeting rooms, or work indoors for example, a fall overboard is likely not a relevant scenario, and it is therefore not important to measure acceleration at such times. By measuring acceleration only when a person is in an MOB-zone, and/or by using a more accurate positioning system only when a person is in an MOB-zone, and/or broadcasting data at a higher frequency only when a person is in an MOB-zone, battery consumption can be significantly reduced, which allows for a longer battery life between charging or change of battery and minimizes the risk of losing signals from a wristband 100 due to a depleted battery. The above will also apply if separate activation zones and event prone zones are present.

If the event detection device 130 detects a fall, based on the internal algorithm of the device 130 and the accelerometer, it will notify the active tag 120 via interrupt line, as indicated by the dotted line 131. The active tag 120 will start broadcasting that a fall is detected, in some cases together with its position (which may be based on the last zone ID) or positioning information and the wristband ID, indicated by 122. It may be that compared to normal mode, the active tag 120 broadcasts the same information in MOB-mode, however with an MOB-alarm informing of a fall event, such as an event ID.

The central controller 300 will receive the MOB-alarm via the readers 200 in the event prone zone and an operator can immediately get this information. The system 500 may be set up such that when a fall is detected and forwarded to the central controller 300, an alarm goes off automatically. Other functions may also be initiated automatically or manually by an operator, such as turning on additional lights in the area where the fall occurred, notifying nearby personnel to initiate a search, etc. The wristband 100 will continue broadcasting, however, if the wristband 100 is underwater, as may be the case for a man overboard situation, the signal will disappear as the Bluetooth signals are not capable of travelling through water. Loss of signal from the wristband 100 that initiated the MOB-alarm can therefore be used as an indication that a fall overboard has occurred. The loss of radio frequency signals from the wristband 100 that has informed of a fall event may also automatically trigger an alarm on the controller 300, and this event, following a fall detection, will be a clear warning that a person has fallen overboard, and actions can be taken immediately.

In this case, in order for a man overboard falling into the sea to initiate a full MOB-alarm, several steps must occur; the person 400 wearing the wristband must enter a MOB-zone (via an activation zone if separate activation zones and MOB-zones are present), the event detection device 130 detects a fall based on measurements of the accelerometer, the system 500 is notified of the fall event, and signals from the wristband 100 are lost. This chain of events minimizes the risk of a false alarm, for example, a loss of signal without a preceding indication that the wristband was located in a MOB-zone, is more likely to be a result of a depleted battery or damage to the wristband than an actual MOB-event.

In other embodiments, the mobile base 100 may comprise other sensors, such as a heart rate monitor or a temperature sensor. The heart rate monitor and/or the temperature sensor may be used to ensure that the wristband is actually attached to the person 400 being supervised. For example, a person may be working in a MOB-zone and suddenly the wristband, i.e. the mobile base 100, falls off the wrist and into the water. The person 400 may not notice that the wristband 100 has fallen off and will not warn the control centre 300 about the possible false alarm. The event detection device 130 will trigger a fall event alarm and the radio frequency signals will be lost, however, the controller 300 may be programmed to check **whether the wristband 100 was actually attached to a person's wrist during the fall** event. Even more, a sudden change in temperature may indicate that the person is in the water.

The mobile base may also comprise a GPS, which may be used to track a person that has fallen into the water, for example from the last received location information broadcasted before falling into water, or by intermittent signals when the arm is raised above water and signals may reach a reader onboard the vessel.

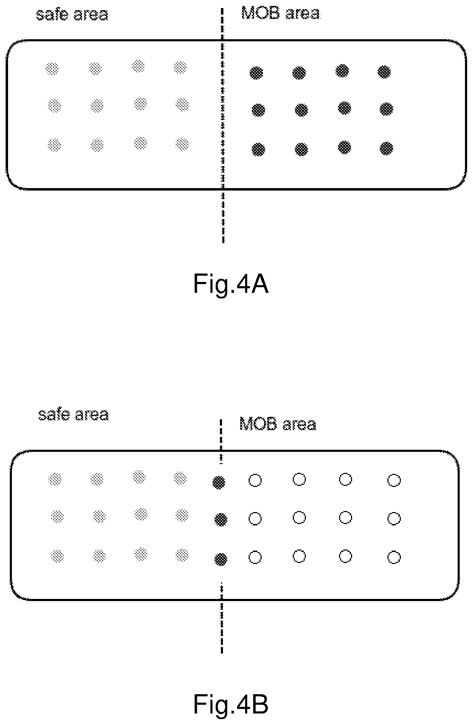

Figures 4A and 4B illustrate the positions of readers in an area including one or more event prone zones and one or more non-event prone zones in two alternative configurations of the system. In figure 4A, readers in a safe zone, representing non-event prone zones, are indicated in grey and readers in an area where an event is considered to be more likely, representing event-prone zones, are indicated in black. This example may be considered as equivalent to an example where the event prone zones and activation zones are the same. All of the readers produce an electromagnetic field, send a zone ID to the mobile base, and receive a zone ID and a mobile ID from the mobile base in response. When moving from a non-event prone zone into an event prone zone/activation zone, the event detection device is activated. When moving in the opposite direction from an event prone zone/activation zone to a non-event prone zone, the event detection device is deactivated.

In figure 4B readers within the safe zone, representing the non-event prone zone(s), are indicated in grey. Readers within or representing the activation zone(s) are indicated in black, and readers within or representing the event-prone zone(s) are indicated in white. Here, when the mobile base moves into an activation zone from a non-event prone zone the event detection device will be activated. Moving back into a non-event prone zone will de-activate the event detection device. This is also so in the example of figure 4A if event-prone zones and activation zones are considered as equivalent in that case.

Subsequent exit from an activation zone in the example shown in figure 4B by continuing movement into the event-prone zone on the way from a non-event prone zone, or vice-versa, will not result in a further change in status of the event detection device. This is because the readers in the event prone zones either do not send out an instruction signal to the mobile base to activate the event detection device, or the instruction signal that is sent out has no effect because the device is already activated. In both of the examples shown in figures 4A and 4B, whenever the mobile base is located within an event-prone zone the event detection device will be active, and whenever the mobile base is located within a non-event prone zone the event detection device will be inactive. The event detection device, once activated, operates as described above to detect an event, such as to detect a fall, in both cases.

In all of the configurations described above, activation of the event detection device can correspond to a change in mode of the mobile base into event detection mode, and other features can also be activated when the mobile base is in event detection mode. These features can also be activated as a result of movement of the mobile base into an activation zone from a non-event prone zone (where the activation zones are also the event prone zones in the example shown in figure 4A).

A more accurate positioning system, based on UWB positioning techniques for example, may be activated when the mobile base transitions to event detection/MOB mode. Within the non-event prone zones, positioning may simply be based on the known position of the reader detecting a signal from the mobile base, or on the zone ID transmitted by the mobile base back to the reader with the mobile ID. The position of the mobile base can be pinpointed to within the read range of a particular reader, and the system will record the mobile base as having this position until a different reader picks up a signal from the mobile base.

When the mobile base is switched into event detection mode, the positioning system may instead use other methods to determine a much more accurate position for the mobile base. A preferred method is to triangulate the position of the mobile base using a signal send from the mobile base, preferably via UWB. The signal has a time stamp added by the readers when the signal is received (and/or may have a time stamp associated), and the times at which the signal is received at three readers located within the event prone zone will allow the position of the mobile base to be accurately triangulated. UWB is particularly advantageous because it allows accurate positioning with fairly few readers located in the event prone zones and in some cases also in activation zones, given that the event detection mode will be activated on entry to the activation zones and the accurate positioning system will be active. The positioning system requires that at least three readers can pick up a signal from the mobile base at once at all positions within the event prone zones. UWB is therefore a suitable choice because of its range.

In addition, the period with which the beacon signal is sent from the mobile base, which represents how often the mobile base transmits data which can be read by readers within the read range, may be shorter when the mobile base is within the event-prone zone than when it is within a non-event prone zone, as described above.

When it is detected that a mobile base has moved into an activation zone from a non-event prone zone (figure 4B), where the activation zones may be equivalent to the event prone zones (figure 4A), one or more of three things may therefore occur. Firstly, the event detection device may be activated and begin operating to determine whether an event has occurred for example by monitoring an acceleration of the mobile base. In addition, the communication/active tag may begin transmitting data at a higher rate and/or the system may switch to a more accurate positioning system to allow the position of the mobile base to be determined more accurately. This may also involve switching between transmission mechanisms, such as switching from Bluetooth/BTLE to UWB, or switching on UWB transmission in addition to BTLE, for the communication/active tag. In most cases the primary/passive tag will send a signal or instruction to the active tag to switch operation mode at which point the above changes will be made. These features are all useful in ensuring that an event can be detected with greater accuracy, and all use battery power so that the ability to switch these off automatically in non-event prone zones is particularly valuable. In event detection mode, the active tag may be constantly switched on such that it does not require activation by the primary tag.

In the example shown in figure 4B, the readers within the event prone zones (shown in white) may not produce an electromagnetic field to activate the first tag, and may not send out a zone ID to the mobile base. In the event-prone zones, accurate positioning and a reliable signal is particularly crucial. To this end, the readers may be configured to receive data sent through UWB and to either process the data to determine a position via triangulation, or send the data to a central controller which can carry out the processing. The signal which is used for the positioning may be the same signal that is used to send the mobile ID and in some cases this transmission comprising a mobile ID may be the only data sent to the readers if no event is detected. Data relating to a potential event, such as acceleration data, is meanwhile being processed at the mobile base. When an event is detected, an event ID may be sent to the reader or readers within the read range along with the mobile ID. The operation of the event detection device within the mobile base and the way in which the system reacts when an event is detected are the same regardless of whether the readers are configured as shown in figure 4A or figure 4B. In general, the difference between the two configurations is the fact that the readers in the event prone zones in the example shown in figure 4B do not produce an EM field and do not send a zone ID to the mobile device. In the configuration shown in figure 4B, the readers within the event prone zones can be more sparsely distributed than within the activation zones and non-event prone zones where a different positioning system is used and where EM field activation is used. Readers in activation zones may also not produce an EM field (although in most cases they will do so), but they must at a minimum be capable of sending an instruction to the mobile base to cause it to switch on event detection mode.

Where readers within the event prone zones do not produce an electromagnetic field, the second tag can be configured to remain active and transmit data all of the time that the mobile base is in the event detection mode. The communication/active tag will therefore be constantly active and drawing power from the battery while the mobile device is in event detection mode and the event detection device is switched on. At the same time, the more accurate positioning system may be in use and data may be being sent at an increased frequency. Once the mobile base enters a non-event prone zone again, the communication tag will go back to being activated by the primary tag when within the electromagnetic field of a reader and will respond to receipt of the zone ID by returning a mobile ID and a zone ID back to the reader. An advantage of the system is therefore that power can be saved by switching on the communication tag permanently only when within event prone zones where continuous operation of the chip is desirable.

Alternatively or in addition, a third tag can be included, and this tag can send out the UWB signal (or a signal in another waveband/format) to be used for positioning. This third tag may be active to send data via UWB only when the mobile base is in the event detection mode. In some cases, only the third tag may be active in the event detection mode in order to save battery, and the UWB (or other) positioning data may comprise the mobile ID and the event ID if an event is detected.

### Reference numbers

| | |
|---|---|
| 100 | Mobile base |
| 110 | Primary tag/First communication tag |
| 111 | Activation of communication tag |
| 120 | Communication tag/Second communication tag |
| 121 | Activation/deactivation of event detection device |
| 122 | Communication tag broadcasting |
| 130 | Event detection device |
| 131 | Event signal |
| 140 | Internal power source |
| 200 | Reader |
| 210 | Electromagnetic field |
| 300 | Central controller |
| 400 | User/person/object |
| 500 | System |

## Claims

1. A mobile base (100) with a mobile base ID configured to be attached to a mobile object (400) for supervising the mobile object (400) inside an area, the area being divided into zones of at least two different types, namely an activation zone and a non-event prone zone, each zone being associated with one or more readers (200) located at fixed positions and configured to create an electromagnetic field associated with each zone (210), receive data transmitted from the mobile base (100), and forward a corresponding mobile base ID to a central controller (300), the mobile base (100) comprising:
- one or more event detection devices (130), each configured to detect a predefined event, and
- a communication tag (120), wherein
the communication tag (120) is configured to, depending on the zone type, activate or deactivate the corresponding one or more event detection devices (130),
the event detection devices (130) are configured to communicate a detected event with an event ID to the communication tag (120), and the communication tag (120) is configured to broadcast the event ID and mobile base ID.

2. A mobile base (100) according to claim 1, wherein each zone is identified by a unique zone ID, and wherein the mobile base comprises a primary tag (110) configured to be activated by the electromagnetic field associated with the zone, activate the communication tag, receive the zone ID from the electromagnetic field and forward the zone ID to the communication tag.

3. A mobile base (100) according to claim 2, wherein the communication tag is configured to broadcast the mobile ID and the zone ID when the zone is a non-event prone zone for positioning of the mobile base by the system.

4. A mobile base (100) according to any of claims 1 to 3, wherein the communication tag is configured to deactivate the corresponding one or more event detection devices when the zone is a non-event prone zone and the event detection devices are active, and the communication tag is configured to activate the corresponding one or more event detection devices when the zone is an activation zone and the event detection devices are inactive.

5. A mobile base (100) according to any of claims 1 to 4, wherein the area also comprises at least one event prone zone and each of the one or more activation zones is located between an event prone zone and a non-event prone zone.

6. A mobile base (100) according to any of claims 1 to 5, wherein the communication tag is configured to broadcast the mobile base ID at predetermined time intervals, and the time intervals are shorter when the event detection device is activated than when it is deactivated.

7. A mobile base (100) according to any of claims 1 to 6, wherein the mobile base is configured to broadcast information to be used by the system in determining the position of the mobile base when the event detection device is active, and wherein the information to be used for positioning comprises a UWB signal.

8. A mobile base (100) according to any of claims 1 to 7, wherein the one or more event detection devices (130) each comprise a sensor, and an internal algorithm prepared to determine if a predefined event has occurred.

9. A mobile base (100) according to claim 8, wherein the one or more event detection devices (130) each comprise at least one of the following sensors: an acceleration, velocity, gyroscope, temperature, gas sensor, heart rate monitor, or barometer.

10. A mobile base (100) according to any of the preceding claims, wherein the primary tag (110) is a passive communication tag.

11. A mobile base (100) according to any of the preceding claims, wherein the communication tag (120) is an active communication tag.

12. A mobile base according to any of the preceding claims, wherein the communication tag (120) operates via radio frequency in the Ultra High Frequency range.

13. A mobile base (100) according to any of claims 1 to 12, wherein the mobile base (100) is configured to be attached to a person as a wristband, and the event detection device (130) comprises an acceleration sensor and is configured to detect a fall of a person (400) wearing the mobile base (100) on the wrist.

14. A system (500) for supervision of at least one mobile object (400) inside an area, the mobile object (400) having a mobile base (100) according to any of the preceding claims attached, the area being divided into zones of at least two different types, namely an activation zone and a non-event prone zone, the system (500) comprising one or more readers (200) located at fixed positions and configured to create an electromagnetic field (210) associated with each zone and to receive data transmitted from the mobile base (100), and to forward a corresponding mobile base ID to a central controller (300).

15. A method for supervision of a mobile object (400) having attached a mobile base (100) with a mobile base ID in an area divided into zones of at least two different types, namely an activation zone and non-event prone zone, each zone being associated with one or more readers (200) located at fixed positions and configured to create an electromagnetic field associated with each zone (210), receive data transmitted from the mobile base (100), and forward a corresponding mobile base ID to a central controller (300), wherein the mobile base (100) comprises a communication tag (120), and at least one event detection device (130), wherein the method comprises the following event driven sequential steps:
- activating or deactivating the corresponding at least one detection device (130) depending on the zone type, and broadcasting the mobile base ID by the communication tag (120);
- detecting an event with an event ID and then notifying the communication tag (120) by the event detection device (130); and
- broadcasting also the event ID with the mobile base ID by the communication tag (120).

## Patentansprüche

1. Mobile Basis (100) mit einer mobilen Basis-ID, die dazu konfiguriert ist, an einem mobilen Objekt (400) angebracht zu sein, um das mobile Objekt (400) innerhalb eines Bereichs zu überwachen, wobei der Bereich in Zonen von mindestens zwei verschiedenen Typen unterteilt ist, nämlich eine Aktivierungszone und eine nicht ereignisanfällige Zone, wobei jede Zone einem oder mehreren Lesegeräten (200) zugeordnet ist, die an festen Positionen liegen und dazu konfiguriert sind, ein elektromagnetisches Feld zu erzeugen, das jeder Zone (210) zugeordnet ist, von der mobilen Basis (100) übertragene Daten zu empfangen und eine entsprechende mobile Basis-ID an eine zentrale Steuerung (300) weiterzuleiten, wobei die mobile Basis (100) Folgendes umfasst:
- eine oder mehrere Ereigniserfassungsvorrichtungen (130), die jeweils zum Erfassen eines vordefinierten Ereignisses konfiguriert sind, und
- ein Kommunikations-Tag (120), wobei
das Kommunikations-Tag (120) dazu konfiguriert ist, abhängig von dem Zonentyp, die entsprechende eine oder mehrere Ereigniserkennungsvorrichtungen (130) zu aktivieren oder zu deaktivieren,
die Ereigniserkennungsvorrichtungen (130) dazu konfiguriert sind, ein erfasstes Ereignis mit einer Ereignis-ID an das Kommunikations-Tag (120) zu kommunizieren, und das Kommunikations-Tag (120)dazu konfiguriert ist, die Ereignis-ID und die mobile Basis-ID auszusenden.

2. Mobile Basis (100) nach Anspruch 1, wobei jede Zone durch eine eindeutige Zonen-ID identifiziert ist, und wobei die mobile Basis ein primäres Tag (110) umfasst, das dazu konfiguriert ist, durch das der Zone zugeordnete elektromagnetische Feld aktiviert zu werden, das Kommunikations-Tag zu aktivieren, die Zonen-ID von dem elektromagnetischen Feld zu empfangen und die Zonen-ID an das Kommunikations-Tag weiterzuleiten.

3. Mobile Basis (100) nach Anspruch 2, wobei das Kommunikations-Tag dazu konfiguriert ist, die mobile ID und die Zonen-ID auszusenden, wenn die Zone eine nicht ereignisanfällige Zone zum Positionieren der mobilen Basis durch das System ist.

4. Mobile Basis (100) nach einem der Ansprüche 1 bis 3, wobei das Kommunikations-Tag dazu konfiguriert ist, die entsprechende eine oder mehreren Ereigniserfassungsvorrichtungen zu deaktivieren, wenn die Zone eine nicht ereignisanfällige Zone ist und die Ereigniserfassungsvorrichtungen aktiv sind, und das Kommunikations-Tag dazu konfiguriert ist, die entsprechende eine oder mehreren Ereigniserfassungsvorrichtungen zu aktivieren, wenn die Zone eine Aktivierungszone ist und die Ereigniserfassungsvorrichtungen inaktiv sind.

5. Mobile Basis (100) nach einem der Ansprüche 1 bis 4, wobei der Bereich auch mindestens eine Ereignisanfälligkeitszone umfasst und jede der einen oder mehreren Aktivierungszonen zwischen einer Ereignisanfälligkeitszone und einer Nicht-Ereignisanfälligkeitszone liegt.

6. Mobile Basis (100) nach einem der Ansprüche 1 bis 5, wobei das Kommunikations-Tag dazu konfiguriert ist, die mobile Basis-ID in vorbestimmten Zeitintervallen auszusenden, und die Zeitintervalle kürzer sind, wenn die Ereigniserfassungsvorrichtung aktiviert ist, als wenn sie deaktiviert ist.

7. Mobile Basis (100) nach einem der Ansprüche 1 bis 6, wobei die mobile Basis dazu konfiguriert ist, Informationen auszusenden, die von dem System beim Bestimmen der Position der mobilen Basis zu verwenden sind, wenn die Ereigniserfassungsvorrichtung aktiv ist, und wobei die Informationen, die zum Positionieren zu verwenden sind, ein UWB-Signal umfassen.

8. Mobile Basis (100) nach einem der Ansprüche 1 bis 7, wobei die eine oder mehreren Ereigniserfassungsvorrichtungen (130) jeweils einen Sensor und einen internen Algorithmus umfassen, der dazu vorbereitet ist zu bestimmen, ob ein vordefiniertes Ereignis aufgetreten ist.

9. Mobile Basis (100) nach Anspruch 8, wobei die eine oder die mehreren Ereigniserfassungsvorrichtungen (130) jeweils mindestens einen der folgenden Sensoren umfassen: einen Beschleunigungs-, Geschwindigkeitssensor, ein Gyroskop, einen Temperatur-, Gassensor, einen Herzfrequenzmonitor oder ein Barometer.

10. Mobile Basis (100) nach einem der vorstehenden Ansprüche, wobei das primäre Tag (110) ein passives Kommunikations-Tag ist.

11. Mobile Basis (100) nach einem der vorstehenden Ansprüche, wobei das Kommunikations-Tag (120) ein aktives Kommunikations-Tag ist.

12. Mobile Basis nach einem der vorstehenden Ansprüche, wobei das Kommunikations-Tag (120) über Funkfrequenz im Ultrahochfrequenzbereich arbeitet.

13. Mobile Basis (100) nach einem der Ansprüche 1 bis 12, wobei die mobile Basis (100) dazu konfiguriert ist, an einer Person als ein Armband angebracht zu sein, und die Ereigniserfassungsvorrichtung (130) einen Beschleunigungssensor umfasst und dazu konfiguriert ist, einen Sturz einer Person (400), die die mobile Basis (100) am Handgelenk trägt, zu erfassen.

14. System (500) zur Überwachung mindestens eines mobilen Objekts (400) innerhalb eines Bereichs, wobei das mobile Objekt (400) eine angebrachte mobile Basis (100) nach einem der vorstehenden Ansprüche aufweist, wobei der Bereich in Zonen von mindestens zwei unterschiedliche Typen unterteilt ist, nämlich eine Aktivierungszone und eine nicht ereignisanfällige Zone, wobei das System (500) ein oder mehrere Lesegeräte (200) umfasst, die an festen Positionen liegen und dazu konfiguriert sind, ein elektromagnetisches Feld (210) zu erzeugen, das jeder Zone zugeordnet ist, und um Daten zu empfangen, die von der mobilen Basis (100) übertragen werden, und eine entsprechende mobile Basis-ID an eine zentrale Steuervorrichtung (300) weiterzuleiten.

15. Verfahren zur Überwachung eines mobilen Objekts (400), an dem eine mobile Basis (100) mit einer mobilen Basis-ID in einem Bereich angebracht ist, der in Zonen von mindestens zwei unterschiedlichen Typen unterteilt ist, nämlich eine Aktivierungszone und eine nicht ereignisanfällige Zone, wobei jede Zone einem oder mehreren Lesegeräten (200) zugeordnet ist, die an festen Positionen liegen und dazu konfiguriert sind, ein elektromagnetisches Feld zu erzeugen, das jeder Zone (210) zugeordnet ist, Daten zu empfangen, die von der mobilen Basis (100) gesendet werden, und eine entsprechende mobile Basis-ID an eine zentrale Steuerung (300) weiterzuleiten, wobei die mobile Basis (100) ein Kommunikations-Tag (120) und mindestens eine Ereigniserfassungsvorrichtung (130) umfasst, wobei das Verfahren die folgenden ereignisgesteuerten sequenziellen Schritte umfasst:
- Aktivieren oder Deaktivieren der entsprechenden mindestens einen Erfassungsvorrichtung (130) in Abhängigkeit von dem Zonentyp und Aussenden der Mobilfunkbasis-ID durch das Kommunikations-Tag (120);
- Erfassen eines Ereignisses mit einer Ereignis-ID und dann Benachrichtigen des Kommunikations-Tags (120) durch die Ereigniserkennungsvorrichtung (130); und
- Aussenden auch der Ereignis-ID mit der mobilen Basis-ID durch das Kommunikations-Tag (120).

## Revendications

1. Base mobile (100) avec un identifiant de base mobile configuré pour être attaché à un objet mobile (400) pour superviser l'objet mobile (400) à l'intérieur d'un secteur, le secteur étant divisé en zones d'au moins deux types différents, à savoir une zone d'activation et une zone non sujette aux événements, chaque zone étant associée à un ou plusieurs lecteurs (200) situés à des positions fixes et configurés pour créer un champ électromagnétique associé à chaque zone (210), recevoir des données transmises depuis la base mobile (100) et transmettre un identifiant de base mobile correspondant à un contrôleur central (300), la base mobile (100) comprenant :
- un ou plusieurs dispositifs de détection d'événement (130), chacun configuré pour détecter un événement prédéfini, et
- une étiquette de communication (120), dans laquelle
l'étiquette de communication (120) est configurée pour, en fonction du type de zone, activer ou désactiver le ou les dispositifs de détection d'événement correspondants (130),
les dispositifs de détection d'événement (130) sont configurés pour communiquer un événement détecté avec un identifiant d'événement à l'étiquette de communication (120), et l'étiquette de communication (120) est configurée pour diffuser l'identifiant d'événement et l'identifiant de base mobile.

2. Base mobile (100) selon la revendication 1, dans laquelle chaque zone est identifiée par un identifiant de zone unique, et dans laquelle la base mobile comprend une étiquette primaire (110) configurée pour être activée par le champ électromagnétique associé à la zone, activer l'étiquette de communication, recevoir l'identifiant de zone du champ électromagnétique et transmettre l'identifiant de zone à l'étiquette de communication.

3. Base mobile (100) selon la revendication 2, dans laquelle l'étiquette de communication est configurée pour diffuser l'identifiant mobile et l'identifiant de zone lorsque la zone est une zone non sujette aux événements pour le positionnement de la base mobile par le système.

4. Base mobile (100) selon l'une quelconque des revendications 1 à 3, dans laquelle l'étiquette de communication est configurée pour désactiver le ou les dispositifs de détection d'événement correspondants lorsque la zone est une zone non sujette aux événements et que les dispositifs de détection d'événement sont actifs, et l'étiquette de communication est configurée pour activer le ou les dispositifs de détection d'événement correspondants lorsque la zone est une zone d'activation et que les dispositifs de détection d'événement sont inactifs.

5. Base mobile (100) selon l'une quelconque des revendications 1 à 4, dans laquelle le secteur comprend également au moins une zone sujette aux événements et chacune des une ou plusieurs zones d'activation est située entre une zone sujette aux événements et une zone non sujette aux événements.

6. Base mobile (100) selon l'une quelconque des revendications 1 à 5, dans laquelle l'étiquette de communication est configurée pour diffuser l'identifiant de base mobile à des intervalles de temps prédéterminés, et les intervalles de temps sont plus courts lorsque le dispositif de détection d'événement est activé que lorsqu'il est désactivé.

7. Base mobile (100) selon l'une quelconque des revendications 1 à 6, dans laquelle la base mobile est configurée pour diffuser des informations à utiliser par le système pour déterminer la position de la base mobile lorsque le dispositif de détection d'événement est actif, et dans laquelle les informations à utiliser pour le positionnement comprennent un signal UWB.

8. Base mobile (100) selon l'une quelconque des revendications 1 à 7, dans laquelle le ou les dispositifs de détection d'événement (130) comprennent chacun un capteur, et un algorithme interne préparé pour déterminer si un événement prédéfini s'est produit.

9. Base mobile (100) selon la revendication 8, dans laquelle le ou les dispositifs de détection d'événement (130) comprennent chacun au moins l'un des capteurs suivants : une accélération, une vitesse, un gyroscope, une température, un capteur de gaz, un moniteur de fréquence cardiaque ou un baromètre.

10. Base mobile (100) selon l'une quelconque des revendications précédentes, dans laquelle l'étiquette primaire (110) est une étiquette de communication passive.

11. Base mobile (100) selon l'une quelconque des revendications précédentes, dans laquelle l'étiquette de communication (120) est une étiquette de communication active.

12. Base mobile selon l'une quelconque des revendications précédentes, dans laquelle l'étiquette de communication (120) fonctionne par radiofréquence dans la gamme des Ultra Haute Fréquence.

13. Base mobile (100) selon l'une quelconque des revendications 1 à 12, dans laquelle la base mobile (100) est configurée pour être fixée à une personne comme un bracelet, et le dispositif de détection d'événement (130) comprend un capteur d'accélération et est configuré pour détecter une chute d'une personne (400) portant la base mobile (100) sur le poignet.

14. Système (500) de supervision d'au moins un objet mobile (400) à l'intérieur d'un secteur, l'objet mobile (400) ayant une base mobile (100) selon l'une quelconque des revendications précédentes attachée, le secteur étant divisé en zones d'au moins deux types différents, à savoir une zone d'activation et une zone non sujette aux événements, le système (500) comprenant un ou plusieurs lecteurs (200) situés à des positions fixes et configurés pour créer un champ électromagnétique (210) associé à chaque zone et pour recevoir des données transmises à partir de la base mobile (100), et pour transmettre un identifiant de base mobile correspondant à un contrôleur central (300).

15. Procédé de supervision d'un objet mobile (400) ayant attaché une base mobile (100) avec un identifiant de base mobile dans un secteur divisé en zones d'au moins deux types différents, à savoir une zone d'activation et une zone non sujette aux événements, chaque zone étant associée à un ou plusieurs lecteurs (200) situés à des positions fixes et configurés pour créer un champ électromagnétique associé à chaque zone (210), recevoir des données transmises à partir de la base mobile (100), et transmettre un identifiant de base mobile correspondant à un contrôleur central (300), dans lequel la base mobile (100) comprend une étiquette de communication (120), et au moins un dispositif de détection d'événement (130), dans lequel le procédé comprend les étapes séquentielles pilotées par événement suivantes :
- activer ou désactiver l'au moins un dispositif de détection correspondant (130) en fonction du type de zone, et diffuser l'identifiant de base mobile par l'étiquette de communication (120) ;
- détecter un événement avec un identifiant d'événement, puis notifier l'étiquette de communication (120) par le dispositif de détection d'événement (130) ; et
- diffuser également l'identifiant d'événement avec l'identifiant de base mobile par l'étiquette de communication (120) .
